(19) Europäisches Patentamt
European Patent Office
Office européen des brevets

(11) Veröffentlichungsnummer : **0 505 752 B1**

(12) **EUROPÄISCHE PATENTSCHRIFT**

(45) Veröffentlichungstag der Patentschrift :
**17.08.94 Patentblatt 94/33**

(51) Int. Cl.$^5$ : **C02F 1/72**

(21) Anmeldenummer : **92103208.2**

(22) Anmeldetag : **26.02.92**

(54) **Verfahren zum Entgiften cyanidischer wässriger Lösungen.**

(30) Priorität : **27.03.91 DE 4110055**

(43) Veröffentlichungstag der Anmeldung :
**30.09.92 Patentblatt 92/40**

(45) Bekanntmachung des Hinweises auf die
Patenterteilung :
**17.08.94 Patentblatt 94/33**

(84) Benannte Vertragsstaaten :
**AT BE CH DE FR GB IT LI NL**

(56) Entgegenhaltungen :
**DE-A- 2 352 856
FR-E- 94 739
US-T- 102 905
E. FUCK 'GMELIN HANDBBOOK OF INORGA-
NIC CHEMISTRY, 8TH EDITION,3RD SUPPLE-
MENTVOLUME 2, BORON AND OXYGEN' 1987
, SPRINGER-VERLAG , BERLIN**

(73) Patentinhaber : **Degussa Aktiengesellschaft
Weissfrauenstrasse 9
D-60311 Frankfurt (DE)**

(72) Erfinder : **Steiner, Norbert, Dr.
Freigerichter Strasse 82a
W-8755 Albstadt (DE)**
Erfinder : **Gos, Stephen
Hanauer Strasse 42
W-6458 Rodenbach 2 (DE)**
Erfinder : **Ladwig, Frank
Osterlandstrasse 21
W-6466 Gründau 2 (DE)**
Erfinder : **Diehl, Manfred, Dr.
Zeuläckerstrasse 40
W-6000 Frankfurt 60 (DE)**

**Beschreibung**

Die Erfindung richtet sich auf ein Verfahren zum Entgiften von Cyanide und/oder Cyanokomplexe enthaltenden wäßrigen Lösungen in Gegenwart von Schwermetallen aus der Reihe Mn, Co, Ni, Cu, Cd, Zn, insbesondere Kupfer, durch oxidative Behandlung derselben mit Peroxidverbindungen.

Abwässer welche Cyanide und/oder Cyanhydrine enthalten, lassen sich nach dem Verfahren der US-PS 3,970,554 durch Zusatz von Peroxidverbindungen bei Temperaturen von 10 bis 80 °C und pH-Werten von 6 bis 12 in Gegenwart von Jodidionen als Katalysator und ggf. Silberionen entgiften. Als bevorzugte Peroxidverbindung wird Wasserstoffperoxid herausgestellt; in gleicher Weise sollen Alkali- und Erdalkaliperoxide verwendbar sein. Zwar werden in diesem Dokument auch Perborate, Percarbonate und Persulfate als wirkungsvoll bezeichnet, der Vergleich des Tests 10 (Beispiel 2) mit dem Test 25 (Beispiel 7) läßt aber die Überlegenheit von Wasserstoffperoxid gegenüber Natriumperborat erkennen, weil im Falle des Perborats die dreifache Reaktionszeit erforderlich war, um den Cyanidgehalt unter 0,1 mg/l abzusenken.

In der US-PS 3,970,554 wird ausgeführt, daß die Entgiftung von Cyaniden mit Wasserstoffperoxid in Abwesenheit von Katalysatoren unbefriedigend verläuft. Andererseits haben die bekannten Kupferkatalysatoren den Nachteil, daß gerade dann, wenn die letzte Menge Cyanid zu zerstören ist, auch die Zersetzung von Wasserstoffperoxid stark katalysiert wird. Oftmals wird somit kein ausreichender Entgiftungsgrad erzielt.

Im Verlauf der Reaktion bildet sich aus den Kupfercyanokomplexen durch stufenweisen Abbau das schwerlösliche CuCN oder - wenn dieses mit überschüssigem $H_2O_2$ vollständig abgebaut wird - der Kupfertetramminkomplex, der die Ausfällung des Kupfers als Hydroxid verhindert. Somit kann das behandelte Abwasser auch eine unerwünscht hohe Restmenge an Cu-Ionen enthalten.

Die aufgezeigten Probleme gewinnen insbesondere dann an Bedeutung, wenn dem zu entgiftenden Abwasser zum Zwecke einer ausreichend raschen Entgiftung eine große Menge Kupfer zugesetzt wird, woraus zunächst Kupfercyanokomplexe gebildet werden, oder das Abwasser bereits herkunftsbedingt eine größere Menge Kupfercyanokomplexe und ggf. andere Schwermetallcyanokomplexe, wie solche von Cd, Ni, Co, Zn, enthält. Das Verfahren gemäß der US-PS 3,970,554 legt nahe, solche Abwässer zu entgiften, welche frei von Schwermetallcyaniden sind und/oder keinen Zusatz von Kupfersalzen als Katalysator erfordern; lediglich ein Zusatz von maximal 1 mg Ag$^+$/l als Katalysator und damit die Anwesenheit der äquivalenten Menge des Ag(CN)$_2^-$ - Komplexes wurde als zweckmäßig erachtet.

Feststofffreie oder feststoffhaltige Abwässer, etwa Erzaufschlämmungen, wie sie in der Minentechnik, etwa der Goldlaugung mittels Cyanid, sowie in der Galvanotechnik anfallen, enthalten in bedeutendem Umfang Schwermetallcyanokomplexe, insbesondere Kupfercyanokomplexe. Solche Abwässer lassen sich mit Wasserstoffperoxid nicht befriedigend entgiften und/oder das erforderliche Molverhältnis $H_2O_2$ zu Cyanid ist so hoch, daß die Wirtschaftlichkeit völlig infrage gestellt wird.

Die Oxidation des Cyanids zu Cyanat mit sich daran anschließender Hydrolyse des Cyanats kann gemäß US-PS 3,510,424 anstelle mit Wasserstoffperoxid auch mit Peroxosäuren oder Salzen davon bewerkstelligt werden. Die Oxidationsreaktion mit beispielsweise Peroxomonosulfat verläuft rascher als mit $H_2O_2$, kann aber durch Katalysatoren, wie Kupfersalze, weiter beschleunigt werden. Nach diesem Verfahren lassen sich der Cyanidgehalt von Schwermetallcyanokomplexe enthaltenden wäßrigen Lösungen meist ausreichend absenken. Die Wirtschaftlichkeit des Verfahrens unter Verwendung von Peroxosäuren wird aber durch deren gegenüber Wasserstoffperoxid viel höheren Marktpreis eingeschränkt.

Die FR-A 94 739 lehrt ein Verfahren zum Entgiften von Cyanide und/oder Schwermetallcyanokomplexe enthaltenden wäßrigen Lösungen unter Verwendung von organischen oder anorganischen Peroxysäuren oder deren Salzen. Die Peroxysäuren können als solche oder in Form eines Gemischs aus einer Säure und Wasserstoffperoxid oder einer diese freisetzenden Verbindung, wie Perborat, Percarbonat oder Erdalkaliperoxid, woraus sich in-situ die Peroxysäure bildet, eingesetzt werden.

Anstelle marktüblicher Peroxosulfate lassen sich gemäß der EP-A 0 355 417 auch spezielle Oxidationsgemische aus Wasserstoffperoxid und Schwefelsäure zur Cyanidentgiftung verwenden, wodurch die Einsatzmenge an $H_2O_2$ vermindert werden konnte. Auch Oxidationsgemische aus Wasserstoffperoxid und Phosphorsäure wurden vorgeschlagen - EP-A 0 398 234. Die Verwendung von Mineralsäure in Bereichen, wo cyanidische Abwässer anfallen oder entgiftet werden, ist aber mit dem Risiko verbunden, daß im Falle einer Fehlsteuerung in die cyanidische Lösung Mineralsäure gelangen kann und damit Cyanwasserstoff entweicht und die Arbeitssicherheit beeinträchtigt wird. Bei der Herstellung der genannten Oxidationsgemische bedarf es zudem einer Lösestation sowie gegebenenfalls einer Vorrichtung zum Kühlen.

Schließlich konnte auch gemäß EP-A 0 355 418 bei der Cyanidentgiftung die Einsatzmenge an Wasserstoffperoxid reduziert werden, jedoch war hierzu die Mitverwendung eines speziellen Fällungsmittels für Schwermetalle, nämlich Trimercapto-s-triazin, erforderlich.

Aus der Praxis ist bekannt, daß die Entgiftung cyanidischer Abwässer mit Peroxidverbindungen insbeson-

2

EP 0 505 752 B1

dere dann unbefriedigend verläuft und/oder zu einem extrem hohen Verbrauch an Peroxidverbindungen führt, wenn das Abwasser manganhaltig ist.

Wie zuvor dargelegt wurde, sind zwar diverse Verfahren zur Entgiftung von Cyanide und/oder Cyanokomplexe toxischer Schwermetalle enthaltenden wäßrigen Lösungen bekannt, es besteht aber weiterhin ein Interesse, die Möglichkeiten zur Entgiftung unter Verwendung von Peroxidverbindungen zu erweitern, um unterschiedlichen Gegebenheiten in der Praxis Rechnung tragen zu können. Ziele einer gewünschten Verbesserung zur Steigerung der Effektivität und/oder Wirtschaftlichkeit des Verfahrens sind: Erhöhung des Entgiftungsgrades bezüglich des Rest-Cyanid- und Rest-Schwermetallgehalts; Verkürzung der Reaktionsdauer und Erniedrigung der Einsatzmenge Peroxidverbindung im Vergleich zur Verwendung von $H_2O_2$ in Gegenwart üblicher Katalysatoren; Verwendung ausreichend verfügbarer Peroxidverbindungen, welche pro Peroxidäquivalent preiswerter sind als marktübliche Peroxosulfate. Schließlich richtet sich eine weitere Aufgabe der Erfindung darauf, das gattungsgemäße Verfahren so zu gestalten, daß auch manganhaltige, Cyanide und/oder Cyanokomplexe enthaltende wäßrige Lösungen in Gegenwart von Schwermetallen aus der Reihe Cu, Cd, Ni, Co, und Zn, insbesondere Cu, sicher und mit geringerer Einsatzmenge an Peroxidverbindungen entgiftet werden können, als dies bisher möglich war.

Gefunden wurde ein Verfahren zum Entgiften von Cyanide und/oder Cyanokomplexe enthaltenden wäßrigen Lösungen, welche auch Feststoffe enthalten können, in Gegenwart von Verbindungen von Schwermetallen aus der Reihe Mn, Co, Ni, Cu, Cd, Zn, insbesondere Cu, durch oxidative Behandlung der Lösungen mit Peroxidverbindungen, wobei pro Äquivalent Cyanid mindestens ein Äquivalent Peroxidverbindung eingesetzt wird, bei pH-Werten von 8 bis 12 und Temperaturen zwischen dem Gefrierpunkt der Lösungen bis 80 °C, das dadurch gekennzeichnet ist, daß man als Peroxidverbindungen eine Kombination aus einem Alkaliperborat oder Erdalkaliperoxid und Wasserstoffperoxid verwendet, wobei das Alkaliperborat oder Erdalkaliperoxid in fester oder in Wasser gelöster oder suspendierter Form der zu entgiftenden Lösung zugesetzt oder in dieser Lösung aus (i) einer zunächst zugegebenen Quelle für Borat und, soweit erforderlich, Alkaliionen oder (ii) einer Quelle für Erdalkaliionen und anschließend Wasserstoffperoxid bei einem Molverhältnis von Borat ($BO_2^-$) oder Erdalkaliionen zu $H_2O_2$ von 1 zu größer 1 gebildet werden.

Unter den Cyanokomplexen sind insbesondere solche der toxischen Schwermetalle Kupfer, Zink, Cadmium, Nickel und Kobalt zu verstehen. Vorzugsweise enthalten die zu entgiftenden Lösungen Kupfer, das entweder herkunftsbedingt bereits in der Lösung enthalten ist -in Form von Kupfercyanokomplexen - oder als wirksamer Katalysator in Form einer Cu-Verbindung, insbesondere eines löslichen Cu(II)-Salzes, der zu entgiftenden Lösung zugesetzt worden ist. Die Konzentration an in der zu entgiftenden Lösung bereits vorhandenen und zugesetzten Schwermetallen beträgt vor der Zugabe der Peroxidverbindung üblicherweise mehr als 1 mg/l.

Mit dem erfindungsgemäßen Verfahren unter Verwendung einer Kombination aus zugesetztem oder in-situ gebildetem Perborat oder Erdalkaliperoxid und Wasserstoffperoxid gelingt es, cyanidische Lösungen in Gegenwart von Kupfer in wirtschaftlicher Weise bis zu einem Restgehalt unter 1 mg CN/l und unter 1 mg Cu/l zu entgiften. Dies trifft überraschenderweise auch für solche Lösungen zu, welche manganhaltig sind. Nicht vorhersehbar war ferner, daß im erfindungsgemäßen Verfahren der Nickelgehalt nickelhaltiger cyanidischer Lösungen weiter abgesenkt werden konnte als unter Verwendung von $H_2O_2$ oder Peroxomonosulfat.

In Anbetracht der Ergebnisse, welche im Verfahren der eingangs gewürdigten US-PS 3,970,554 mit Perborat im Vergleich zu Wasserstoffperoxid erhalten wurden, war es überraschend, daß die Kombination Perborat mit Wasserstoffperoxid in Gegenwart von Kupfer als Katalysator sowohl eine bedeutende Reduzierung der Einsatzmenge - Äquivalente Peroxidverbindung pro Äquivalente Cyanid - erlaubt als auch zu einer Verkürzung der Entgiftungsreaktion führt.

Unter den Alkaliperboraten lassen sich Natriumperborat, insbesondere in der Form des sogenannen Monohydrats ($NaNO_3 \cdot H_2O$) und Tetrahydrats ($NaBO_3 \cdot 4 H_2O$), Kaliumperborat-hydrat ($KBO_3 \cdot nH_2O$ mit n = 0,2 bis 1) sowie sogenanntes superoxidiertes Natriumperborat mit mehr als 16 % Aktivsauerstoff im erfindungsgemäßen Verfahren verwenden. Diese Perborate können als Feststoff oder in gelöster oder suspendierter Form zugegeben werden, oder sie werden in der zu entgiftenden Lösung aus zugegebenem Wasserstoffperoxid und einer Quelle für Metaborat- und Alkaliionen, insbesondere $NaBO_2$, $Na_2B_4O_7$ oder Borsäure und NaOH, in-situ gebildet. Das Molverhältnis Borat, berechnet als $BO_2^-$, zu Wasserstoffperoxid wird auf Werte unter 1 abgesenkt, wenn zu Beginn der zu entgiftenden Lösung die gesamte Quelle für Borat und, soweit erforderlich, die Quelle für Alkaliionen und anschließend $H_2O_2$ während der Entgiftung in einer oder mehreren Portionen zugegeben wird; bevorzugt wird ein Molverhältnis Borat, berechnet als $BO_2^-$, zu $H_2O_2$ von 1 zu 2 bis 4.

Im Falle der Erdalkaliperoxide als Peroxidverbindung können diese wie bei den Perboraten in fester Form zugegeben oder in-situ aus $H_2O_2$ und einer Quelle für Erdalkaliionen, wie Oxide, Hydroxide, Chloride derselben, gebildet werden. Bevorzugt werden unter den Erdalkaliperoxiden Magnesium- und insbesondere Calciumperoxid. Bei der in-situ-Bildung werden die Quelle für Erdalkaliionen (berechnet als $Me^{2+}$) und $H_2O_2$ im Mol-

3

verhältnis von 1 zu größer 1, eingesetzt; ein Molverhältnis von 1 zu 2 bis 3 kommt insbesondere dann in Betracht, wenn $H_2O_2$ während des Entgiftungsprozesses in mehreren Portionen oder kontinuierlich zur eine ausreichende Menge Ca-Ionen enthaltenden cyanidischen Lösung zugegeben wird.

Bei den zu entgiftenden Lösungen, welche auch Feststoffe enthalten können, handelt es sich im allgemeinen um Abwässer unterschiedlichster Provenienz, etwa der Minenindustrie, chemischen Industrie, galvanotechnischen Betrieben sowie Waschwässern von Verbrennungsanlagen oder Hochofenprozessen. Aus dem Bereich der Minenindustrie sei beispielhaft auf Abwässer und Abgänge (Erzaufschlämmungen) aus Prozessen zur Gewinnung von Gold durch Cyanidlaugung hingewiesen; derartige Abwässer und Abgänge enthalten häufig in erheblichem Umfang Kupfercyanokomplexe, daneben zum Teil auch Nickel und andere Schwermetalle. Bei der Metallisierung mittels üblicher galvanotechnischer Prozesse fallen vielfach cyanidische Abwässer mit einem mehr oder weniger breiten Spektrum an Cyanokomplexe bildenden Schwermetallen aus der Reihe Mn, Co, Ni, Cu, Zn, Cd an; besonders häufig enthalten diese Abwässer Kupfer, ferner Nickel und teilweise Mangan.

Bei der oxidativen Behandlung der zu entgiftenden Lösungen mit Peroxidverbindungen wird freies und als Cyanokomplex gebundenes Cyanid zunächst zu Cyanat oxidiert, letzteres zu $NH_4^+$ und $HCO_3^-$ hydrolysiert. Bekannt ist, daß die Oxidation des Cyanids durch Schwermetallkationen, wie insbesondere Cu(II), Co(II), Ni(II), katalytisch wirksam beschleunigt wird. In der Praxis wird insbesondere von der Zugabe von Cu(II) als Katalysator oft Gebrauch gemacht, um den geforderten Restcyanidgehalt in akzeptabler Reaktionszeit zu erzielen.

Der überstöchiometrische Verbrauch an Peroxidverbindungen resultiert einmal aus der Zersetzung derselben, welche durch die gleichen Metalle katalysiert wird, welche auch die Cyanidoxidation katalysieren. Zudem ist auch zu berücksichtigen, daß Cyanat neben der Hydrolyse auch der Peroxolyse unterliegt ($OCN^-$ + $2H_2O_2 \rightarrow NH_3 + HCO_3^- + O_2$). Vorzugsweise werden pro Cyanidgruppe 2 bis 4 Äquivalente Peroxidverbindungen eingesetzt. Insbesondere zur Entgiftung komplex zusammengesetzter galvanischer Abwässer kann es erforderlich sein, den Einsatz an Peroxidverbindung weiter zu erhöhen.

Es wurde ferner gefunden, daß durch die Verwendung einer Kombination aus einem Alkaliperborat und Wasserstoffperoxid anstelle alleiniger Verwendung des Alkaliperborats bei gleichem Verhältnis Cyanid zu Peroxidverbindung die Wirtschaftlichkeit des Verfahrens erhöht werden konnte, weil $H_2O_2$ als Vorprodukt des Perborats naturgemäß preiswerter ist. Zudem ist ein verminderter Verbrauch an Borat ein weiterer Vorteil. Ein Molverhältnis von Alkaliperborat, insbesondere Natriumperboratmonohydrat oder -tetrahydrat, zu Wasserstoffperoxid von 1 zu 3 bis 3 zu 1 hat sich als günstig erwiesen. Auf den unterstöchiometrischen Einsatz von Erdalkaliionen gegenüber $H_2O_2$ im Falle der Verwendung von Erdalkaliperoxiden wurde bereits hingewiesen.

Die Entgiftung kann oberhalb des Gefrierpunktes der Lösung bis 80 °C durchgeführt werden. Höhere Temperaturen sind zwar möglich, aus wirtschaftlichen Gründen im Regelfall aber nicht zweckmäßig. Bevorzugt werden Temperaturen im Bereich von 10 bis 50 °C, insbesondere 15 bis 30 °C. Während der Entgiftung soll der pH-Wert zwischen 8 und 12 liegen, vorzugsweise zwischen 9,5 und 11,5 , insbesondere zwischen 10 und 11. Der pH-Wert wird zweckmäßigerweise während der Entgiftung innerhalb der bevorzugten Bereiche aufrechterhalten. Die Zugabe der Peroxidverbindungen kann in einer Portion zu Beginn der Entgiftung oder in mehreren Portionen oder kontinuierlich während der Entgiftung erfolgen.

Es ist möglich, die Entgiftungsreaktion auch in Gegenwart von Jodid als Katalysator durchzuführen.

Vorzugsweise wird in diesem Fall der Endpunkt der Entgiftung potentiometrisch in Gegenwart von 1 bis 1000 µg $Ag^+$/l mittels eines Silber-/Thalamid-Elektrodenpaares indiziert.

Die Vorteile des erfindungsgemäßen Verfahrens bestehen darin, daß zur Entgiftung cyanidischer Lösungen, welche Cyanokomplexe bildende toxische Metalle enthalten, das Äquivalentverhältnis Peroxidverbindung zu Cyanid gegenüber Wasserstoffperoxid/Cyanid und sogar Peroxomonosulfat/Cyanid wesentlich erniedrigt werden konnte. Gleichzeitig konnte der Entgiftungsgrad bezüglich der Schwermetalle, wie insbesondere Kupfer, aber auch Nickel, verbessert werden; damit können nun auch solche cyanidischen Abwässer durch Zugabe von Cu(II)-verbindungen als Katalysator wirksam und rasch entgiftet werden, wo bisher von der Cu(II)-Zugabe im Hinblick auf einen zu hohen Cu-Restgehalt Abstand genommen wurde. Besonders bedeutsam ist, daß nun auch manganhaltige cyanidische Lösungen in wirtschaftlicher Weise entgiftet werden können.

**Beispiel 1 (Vergleichsversuche, nicht erfindungsgemäß)**

Entgiftung einer wäßrigen Lösung, enthaltend 100 ppm leicht freisetzbares Cyanid ($CN_{WAD}$) und 60 ppm Cu unter Verwendung von Natriumperborattetrahydrat (Pbth) im Vergleich zu $H_2O_2$. Die Lösung wurde hergestellt durch Auflösen von Natriumcyanid und $CuSO_4 \cdot 5H_2O$ in Wasser; der pH-Wert wurde vor der Entgiftung mit NaOH auf 10 eingestellt. Die Entgiftung erfolgte bei Raumtemperatur. Der Tabelle 1 sind die gewählten Molverhältnisse $H_2O_2$ : $CN_{WAD}$ und $NaBO_3 \cdot 4H_2O$ (=Pbth) : $CN_{WAD}$ sowie die Entgiftungsergebnisse in Abhängigkeit von der Einsatzmenge an Peroxidverbindung, ferner die pH-Werte und die Reaktionszeiten, zu entnehmen. $H_2O_2$ wurde als 70 gew.-%ige wäßrige Lösung, Natriumperborat-tetrahydrat in fester Form (Pulver) zugegeben. Zur Potentiometrischen Endpunktindizierung unter Verwendung eines Silber-/Thalamid-Elektrodenpaares wurde die Entgiftung jeweils in Gegenwart von 0,1 ml Aktivator CN (Firma Degussa AG) pro 1 Lösung durchgeführt. Der Cu-Gehalt wurde durch Atomabsorptionsspektren, der Cyanidgehalt photometrisch mittels der Pikrinsäuremethode bestimmt.

Während im Falle von $H_2O_2$ zur Entgiftung auf einen Restcyanidgehalt von unter 0,5 ppm und Rest-Cu-Gehalt von unter 1 ppm eine $H_2O_2$-Einsatzmenge von mehr als 6 Mol pro CN-Gruppe erforderlich war, konnte dieses Ziel unter Verwendung von Pbth bereits mit 3 Mol Pbth pro CN-Gruppe erreicht werden.

Tabelle 1

| Molverhältnis $[H_2O_2]:[CN_{WAD}]$ | Restkonzentration nach Entgiftung | | pH vor → nach der Entgiftung | Reaktions- zeit (min) |
|---|---|---|---|---|
| | $[CN_{WAD}]$ (ppm) | [Cu] (ppm) | | |
| 1 : 1 | 37,8 | 47,3 | 10 konst. | 60 |
| 2 : 1 | 18,1 | 22,6 | 10 konst. | 23 |
| 3 : 1 | 16,64 | 20 | 10 konst. | 14 |
| 4 : 1 | 13,12 | 15,2 | 10 konst. | 10 |
| 6 : 1 | 4,32 | 15,2 | 10 konst. | 7 |
| 8 : 1 | 0,02 | <1,0 | 10 konst. | 2 |

| Molverhältnis $[Pbth]:[CN_{WAD}]$ | | | | |
|---|---|---|---|---|
| 1 : 1 | 35,53 | 40,9 | 10 → 10,3 | 25 |
| 2 : 1 | 3,93 | 3,67 | 10 → 10,4 | 9 |
| 3 : 1 | 0,36 | 0,08 | 10 → 10,7 | 7 |
| 4 : 1 | 0,21 | <0,07 | 10 → 10,9 | 5 |

**Beispiel 2 (Vergleichsversuche, nicht erfindungsgemäß)**

Entgiftung einer wäßrigen Lösung, enthaltend 100 ppm leicht freisetzbares Cyanid ($CN_{WAD}$), 60 ppm Cu und zusätzlich 2 ppm Mn(II) (zugegeben als $MnSO_4 \cdot H_2O$). Die Bedingungen der Entgiftung entsprechen jenen des Beispiels 1. Tabelle 2 enthält die Ergebnisse - dargestellt ist wieder der Vergleich von $H_2O_2$ mit Pbth. Auch hier konnte die Einsatzmenge an Mol Peroxidverbindung pro CN-Gruppe im Falle von Pbth gegenüber $H_2O_2$ auf etwa die Hälfte reduziert werden.

## Tabelle 2

| Molverhältnis $[H_2O_2]:[CN_{WAD}]$ | Restkonzentration nach Entgiftung | | pH vor $\rightarrow$ nach der Entgiftung | Reaktions- zeit (min) |
|---|---|---|---|---|
| | $[CN_{WAD}]$ (ppm) | $[Cu]$ (ppm) | | |
| 2 : 1 | 75,65 | 59,4 | 10 $\rightarrow$ 10,7 | 60 |
| 4 : 1 | 35 | 39 | 10 $\rightarrow$ 11 | 17 |
| 6 : 1 | 9,76 | 10,98 | 10 $\rightarrow$ 10,8 | 8 |
| 8 : 1 | 0,04 | 0,48 | 10 $\rightarrow$ 11,3 | 6 |

| Molverhältnis $[Pbth]:[CN_{WAD}]$ | | | | |
|---|---|---|---|---|
| 1 : 1 | 82,31 | 60,9 | 10 $\rightarrow$ 10,5 | 60 |
| 2 : 1 | 48,3 | 56,25 | 10,3 $\rightarrow$ 10,6 | 30 |
| 3 : 1 | 7 | 7,2 | 10 $\rightarrow$ 10,4 | 9 |
| 4 : 1 | 0,31 | 0,06 | 10 $\rightarrow$ 10,3 | 5 |

**Beispiel 3**

Die cyanidische Lösung des Beispiels 1 wurde bei konstantem Molverhältnis Peroxidverbindung : Cyanid-$_{WAD}$ = 3 entgiftet, wobei auch Kombinationen von $H_2O_2$ und Natriumperborattetrahydrat (Pbth) eingesetzt wurden. Testbedingungen gemäß Beispiel 1. Die Ergebnisse folgen aus Tabelle 3. Es zeigte sich, daß bei einem Molverhältnis $H_2O_2$ : Pbth von beispielsweise 2:1 ein ausgezeichnetes Entgiftungsergebnis erzielt wurde.

Tabelle 3

| Molverhältnis $[H_2O_2]:[Pbth]$ | Restkonzentration nach Entgiftung | | pH vor → nach Detox | Reaktions- zeit (min) |
|---|---|---|---|---|
| | $[CN_{WAD}]$ (ppm) | [Cu] (ppm) | | |
| 3 : 0 *) | 16,64 | 20 | 10 konst. | 14 |
| 2,5 : 0,5 | 1,14 | 1,25 | 10 konst. | 7 |
| 2 : 1 | 0,41 | 0,23 | 10 konst. | 5,7 |
| 1,5 : 1,5 | 0,36 | 0,18 | 10 → 10,3 | 5,5 |
| 1 : 2 | 0,25 | 0,25 | 10 → 10,5 | 5,5 |
| 0 : 3 *) | 0,36 | 0,08 | 10 → 10,7 | 7 |

*) Vergleichsversuche

**Beispiel 4**

Die manganhaltige cyanidische Lösung des Beispiels 2 wurde bei konstantem Molverhältnis Peroxidverbindung : $Cyanid_{WAD}$ von 4 : 1 mit Kombinationen aus $H_2O_2$ und Pbth entgiftet. Die Ergebnisse folgen aus Ta-belle 4. Während mit $H_2O_2$ allein sowohl bezüglich des Rest-CN-als auch Rest-Cu-Gehalts ein völlig unzureichendes Entgiftungsergebnis festzustellen war, konnte mit der Kombination $H_2O_2$/Pbth (=2:2) ein etwa gleich gutes, einwandfreies Entgiftungsergebnis wie mit Perborat allein erhalten werden.

Tabelle 4

| Molverhältnis $[H_2O_2]:[Pbth]$ | Restkonzentration nach Entgiftung | | pH vor → nach Detox | Reaktions- zeit (min) |
|---|---|---|---|---|
| | $[CN_{WAD}]$ (ppm) | [Cu] (ppm) | | |
| 4 : 0 *) | 35 | 39 | 10 → 11 | 17 |
| 3 : 1 | 9,84 | 10 | 10 → 10,8 | 8 |
| 2 : 2 | 0,35 | <0,06 | 10 → 10,75 | 8 |
| 1 : 3 | 0,31 | 0,31 | 10 → 10,7 | 6 |
| 0 : 4 *) | 0,31 | 0,06 | 10 → 10,3 | 5 |

*) Vergleichsversuche

**Beispiel 5**

Die cyanidische Lösung gemäß Beispiel 1 mit 100 ppm $CN_{WAD}$ und 60 ppm Cu wurde unter Verwendung von in-situ gebildetem Perborat entgiftet. Als Quelle für Borat wurde Borsäure eingesetzt. Tabelle 5 zeigt die Entgiftungsergebnisse von Versuchen mit $H_2O_2$ allein (Beispiel 5a), mit den Kombinationen $H_2O_2/NaBO_3 \cdot 4H_2O$ (Beispiel 5b) und $H_2O_2/H_3BO_3$ (Beispiel 5c); $H_2O_2$ und Perborat bzw. die Quelle für Borat wurden zu Beginn der zu entgiftenden Lösungen zugegeben und der pH-Wert auf 11 eingestellt und während der Entgiftung konstant gehalten.

<u>Tabelle 5</u>

| Beispiel | Zugabe | Molverhältnisse | Restkonzentrationen $CN_{WAD}$ (ppm) | Cu (ppm) | Reaktionszeit (Min.) |
|---|---|---|---|---|---|
| 5a *) | $H_2O_2$ | $H_2O_2 : CN_{WAD} = 3 : 1$ | 15,3 | 50,4 | 12 |
| 5b | $H_2O_2$ | $H_2O_2 : CN_{WAD} = 2 : 1$ | 7,1 | 7,2 | 8 |
|  | $NaBO_3 \cdot 4H_2O$ (=Pbth) | $Pbth : CN_{WAD} = 1 : 1$ |  |  |  |
| 5c | $H_2O_2$ | $H_2O_2 : CN_{WAD} = 3 : 1$ | 7,0 | 7,8 | 6 |
|  | $H_3BO_3$ | $H_3BO_3 : CN_{WAD} = 1 : 1$ |  |  |  |

*) Vergleichsversuch

Der Vergleich der Beispiele 5b und 5c zeigt, daß zugesetztes Perborat und in-situ gebildetes Perborat etwa das gleiche Ergebnis geben. (Anmerkung: die höheren Restkonzentrationen in Beispiel 5b im Vergleich zu Beispiel 3 mit dem Molverhältnis $H_2O_2/Pbth = 2:1$ sind auf die unterschiedlichen pH-Werte zurückzuführen.

**Beispiel 6**

Entgiftet wurde ein Minenabwasser aus einer Goldmine. Das Abwasser enthielt
145 ppm $CN_{WAD}$
118,7 ppm Cu
62,2 ppm Fe
0,7 ppm Ni
355 ppm SCN
und hatte einen pH-Wert von 8,45. Die Entgiftung erfolgte unter Konstanthaltung des pH-Wertes auf 11 bei 20 °C mit $H_2O_2$ (Beispiel 6a), $H_2O_2/NaBO_3 \cdot 4H_2O$ (Pbth) (Beispiel 6b) und $H_2O_2/Na_2B_4O_7$ (Beispiel 6c). Die Peroxidverbindungen wurden jeweils zu Beginn der Entgiftung zugesetzt, in Beispiel 6c wurde vor der $H_2O_2$-Zugabe Borax zugegeben. Die Ergebnisse folgen aus Tabelle 6.

Tabelle 6

| Beispiel | Zugabe | Molverhältnisse | Restkonzentrationen $CN_{WAD}$ (ppm) | Cu (ppm) |
|---|---|---|---|---|
| 6a *) | $H_2O_2$ | $H_2O_2 : CN_{WAD} = 4 : 1$ | 2,32 | 0,884 |
| 6b | $H_2O_2$ Pbth | $H_2O_2 : CN_{WAD} = 3 : 1$  Pbth $: CN_{WAD} = 1 : 1$ | 0,75 | 0,45 |
| 6c | $H_2O_2$ $Na_2B_4O_7$ | $H_2O_2 : CN_{WAD} = 4 : 1$  $Na_2B_4O_7 : CN_{WAD} = 0,25 : 1$ | 0,53 | 0,34 |

*) Vergleichsversuch

## Patentansprüche

1. Verfahren zum Entgiften von Cyanide und/oder Cyanokomplexe enthaltenden wäßrigen Lösungen, welche auch Feststoffe enthalten können, in Gegenwart von Verbindungen von Schwermetallen aus der Reihe Mn, Co, Ni, Cu, Cd, Zn, insbesondere Cu, durch oxidative Behandlung der Lösungen mit Peroxidverbindungen, wobei pro Äquivalent Cyanid mindestens ein Äquivalent Peroxidverbindung eingesetzt wird, bei pH-Werten von 8 bis 12 und Temperaturen zwischen dem Gefrierpunkt der Lösungen bis 80 °C, dadurch gekennzeichnet, daß man als Peroxidverbindungen eine Kombination aus einem Alkaliperborat oder Erdalkaliperoxid und Wasserstoffperoxid verwendet, wobei das Alkaliperborat oder Erdalkaliperoxid in fester oder in Wasser gelöster oder suspendierter Form der zu entgiftenden Lösung zugesetzt oder in dieser Lösung aus (i) einer zunächst zugegebenen Quelle für Borat und, soweit erforderlich, Alkaliionen oder (ii) einer Quelle für Erdalkaliionen und anschließend Wasserstoffperoxid bei einem Molverhältnis von Borat ($BO_2^-$) oder Erdalkaliionen zu $H_2O_2$ von 1 zu größer 1 gebildet wird.

2. Verfahren nach Anspruch 1, dadurch gekennzeichnet, daß man pro Äquivalent Cyanid 2 bis 4 Äquivalente Peroxidverbindung verwendet.

3. Verfahren nach Anspruch 1 oder 2, dadurch gekennzeichnet, daß man Alkaliperborat und Wasserstoffperoxid im Molverhältnis von 1 zu 3 bis 1 zu 1 verwendet.

4. Verfahren nach Anspruch 1 oder 2, dadurch gekennzeichnet, daß man zur in-situ-Bildung des Alkaliperborats eine Quelle für Metaborat und Wasserstoffperoxid im Äquivalentverhältnis Bor zu $H_2O_2$ von 1 zu 2 bis 4 einsetzt, wobei zunächst die Quelle für Metaborat und, soweit erforderlich, die Quelle für Alkaliionen und anschließend in einer oder mehreren Portionen Was-

9

# EP 0 505 752 B1

serstoffperoxid zugegeben wird.

5. Verfahren nach Anspruch 1 oder 2,
dadurch gekennzeichnet,
daß man Calciumperoxid verwendet, wobei dieses in-situ aus Wasserstoffperoxid und einer Quelle für Calciumionen, insbesondere CaO oder Ca(OH)$_2$, gebildet wird.

6. Verfahren nach einem der Ansprüche 1 bis 5,
dadurch gekennzeichnet,
daß man den pH-Wert während der Entgiftungsreaktion zwischen 9,5 und 11,5 , insbesondere zwischen 10 und 11, hält.

7. Verfahren nach einem der Ansprüche 1 bis 6,
dadurch gekennzeichnet,
daß man die Entgiftungsreaktion in Gegenwart von Jodid durchführt und vorzugsweise den Endpunkt der Entgiftung potentiometrisch in Gegenwart von 1 bis 1000 µg Ag$^+$/l mittels eines Silber-/Thalamid-Elektrodenpaars indiziert.

8. Verfahren nach einem der Ansprüche 1 bis 7,
dadurch gekennzeichnet,
daß man manganhaltige Cyanide und/oder Cyanokomplexe enthaltende wäßrige Lösungen in Gegenwart von Kupfer als Katalysator entgiftet.

## Claims

1. A process for the detoxification of cyanide- and/or cyanocomplex-containing aqueous solutions, in which solids may also be present, in the presence of compounds of heavy metals from the group consisting of Mn, Co, Ni, Cu, Cd and Zn, more particularly Cu, by oxidative treatment of the solutions with peroxide compounds, at least one equivalent of peroxide compound being used per equivalent of cyanide, at pH values of 8 to 12 and at temperatures between the freezing point of the solutions and 80°C, characterized in that a combination of an alkali metal perborate or alkaline earth metal peroxide and hydrogen peroxide is used as the peroxide compound, the alkali metal perborate or alkaline earth metal peroxide being added to the solution to be detoxified in solid form or in solution or suspension in water or being formed in situ therein from (i) a source added first of borate and, if necessary, alkali metal ions or (ii) a source of alkaline earth metal ions and then hydrogen peroxide, the molar ratio of borate (BO$_2^-$) or alkaline earth metal ions to H$_2$O$_2$ of being 1 to greater than 1.

2. A process as claimed in claim 1, characterized in that 2 to 4 equalvents of peroxide compound are used per equivalents of cyanide.

3. A process as claimed in claim 1 or 2, characterized in that the alkali metal perborate and the hydrogen peroxide are used in a molar ratio of 1:3 to 1:1.

4. A process as claimed in claim 1 or 2, characterized in that a source of metaborate and hydrogen peroxide in an equivalent ratio of boron to hydrogen peroxide of 1 : 2 - 4 are used for the **in situ** formation of the alkali metal perborate, the source of metaborate and, if necessary, the source of alkali metal ions being added first and the hydrogen peroxide being subsequently added in one or more portions.

5. A process as claimed in claim 1 or 2, characterized in that calcium peroxide is used, preferably being formed in situ from hydrogen peroxide and a source of calcium ions, more particularly CaO or Ca(OH)$_2$.

6. A process as claimed in any of claims 1 to 5, characterized in that the pH value is kept between 9.5 and 11.5 and, more particularly, between 10 and 11 during the detoxification reaction.

7. A process as claimed in any of claims 1 to 6, characterized in that the detoxification reaction is carried out in the presence of iodide and the end of the detoxification reaction is preferably indicated potentiometrically in the presence of 1 to 1,000 µg Ag$^+$/l by means of a pair of silver/thalamid electrodes.

8. A process as claimed in any of claims 1 to 7, characterized in that manganese-containing aqueous solutions containing cyanides and/or cyano complexes are detoxified in the presence of copper as catalyst.

**Revendications**

1. Procédé de détoxication de solutions aqueuses contenant des cyanures ou des cyanocomplexes, qui peuvent aussi contenir des matières solides, en présence de composés de métaux lourds de la série Mn, Ca, Ni, Cu, Cd, Zn, particulièrement du Cu, par traitement oxydant des solutions avec des composés de peroxyde, procédé dans lequel par équivalent cyanure on met en jeu au moins un équivalent de composé de peroxyde, à des valeurs de pH de 8 à 12 et des températures comprises entre le point de congélation des solutions et 80°C, caractérisé en ce qu'on utilise comme composés de peroxyde une combinaison d'un perborate alcalin ou d'un peroxyde alcalino-terreux et du peroxyde d'hydrogène, et le perborate alcalin ou le peroxyde alcalino-terreux sont ajoutés sous forme solide ou dissoute ou en suspension dans de l'eau ou bien sont formés dans cette solution à partir de (i) une source pour du borate ajoutée d'abord et, si nécessaire, des ions alcalins ou (ii) une source pour des ions alcalino-terreux et ensuite du peroxyde d'hydrogène dans un rapport molaire du borate ($BO_2^-$) ou des ions alcalino-terreux à $H_2O_2$ de 1 à plus que 1.

2. Procédé selon la revendication 1, caractérisé en ce qu'on utilise par équivalent cyanure de 2 à 4 équivalents de composé de peroxyde.

3. Procédé selon les revendications 1 ou 2, caractérisé en ce qu'on utilise du perborate alcalin et du peroxyde d'hydrogène dans le rapport molaire de 1 à 3 jusqu'à 1 à 1.

4. Procédé selon les revendications 1 ou 2, caractérisé en ce qu'on utilise pour la formation in-situ du perborate alcalin une source pour du métaborate et du peroxyde d'hydrogène dans le rapport d'équivalence du Bore à $H_2O_2$ de 1 à 2 jusqu'à 4, et on ajoute d'abord la somme pour du métaborate et si nécessaire, la source pour des ions alcalins et ensuite en une ou plusieurs portions du peroxyde d'hydrogène.

5. Procédé selon les revendications 1 ou 2, caractérisé en ce qu'on utilise du peroxyde de calcium, qui est formé in-situ à partir du peroxyde d'hydrogène et d'une source pour des ions calcium, en particulier du CaO ou du Ca(OH)$_2$.

6. Procédé selon une des revendications 1 à 5, caractérisé en ce qu'on maintient pendant la réaction de détoxication la valeur du pH entre 9,5 et 11,5, en particulier entre 10 et 11.

7. Procédé selon une des revendications 1 à 6, caractérisé en ce qu'on effectue la réaction de détoxication en présence d'iodure et on indique de préférence le point final de la détoxication par voie potentiométrique en présence de 1 à 1000 µg de Ag$^+$/l au moyen d'une paire d'électrodes argent/thalamide.

8. Procédé selon une des revendications 1 à 7, caractérisé en ce qu'on effectue la détoxication des solutions aqueuses renfermant des cyanures et/ou des cyanocomplexes contenant du manganèse en présence de cuivre comme catalyseur.